# EUROPÄISCHE PATENTANMELDUNG

(11) **EP 2 372 269 A2**
(43) Veröffentlichungstag der Anmeldung: **05.10.2011**
(21) Anmeldenummer: 11160457.5
(22) Anmeldetag: 30.03.2011
(51) Int. Cl.: F24J 2/52

(54) **Verbindungsvorrichtung und Profilanordnung**

(30) Priorität: 01.04.2010 CH 4832010
(71) Anmelder: Lechthaler, Andreas, 6710 Nenzing (AT)
(72) Erfinder: Lechthaler, Andreas, 6710 Nenzing (AT)
(74) Vertreter: Patentbüro Paul Rosenich AG

(57) **Zusammenfassung**

Die Erfindung betrifft eine Verbindungsvorrichtung (11) zum Verbinden eines Profils (46) mit einem Bauteil (66), wobei die Verbindungsvorrichtung (11) einen Grundkörper (12) und ein Festlegemittel (18) aufweist. Der Grundkörper (12) umfasst einen Anlageabschnitt (13), der eine mit dem Bauteil (66) in Anlage bringbare Anlageseite (14) sowie eine der Anlageseite (14) gegenüberliegende Aufnahmeseite (15) aufweist, und eine Klemmeinrichtung (26), die an der Aufnahmeseite (15) des Grundkörpers (12) vorgesehen ist und von dieser abragt. Die Klemmeinrichtung (26) umfasst ein Halteelement (27) sowie ein Spannelement (32), welche einen Aufnahmeraum (16) zur zumindest bereichsweisen Aufnahme des Profils (46) ausbilden. Das Spannelement (32) ist am Grundkörper (12) ausgebildet und umfasst einen Spannabschnitt (33), der relativ zum Halteelement (27) entgegen einer inhärenten Federkraft verschwenkbar ist. Weiter betrifft die Erfindung eine Profilanordnung mit einem Profil und einer derartigen Verbindungsvorrichtung (11).

## Beschreibung

Die Erfindung bezieht sich auf eine Verbindungsvorrichtung zum Verbinden eines Profils mit einem Bauteil, insbesondere zum Verbinden eines Profils mit einem Bauteil zum Halten von Solarmodulen, der im Oberbegriff des Anspruchs 1 genannten Art. Weiter bezieht sich die Erfindung auf eine Profilanordnung mit einem Profil und mit einer derartigen Verbindungsvorrichtung zur Verbindung des Profils mit einem Bauteil.

Derartige Verbindungsvorrichtungen werden für Unterkonstruktionen z. B. auf Dächern oder bei Freilandanlagen verwendet, an welchen beispielsweise plattenförmige Elemente, wie Solarmodule angeordnet werden. Die Profile werden an Bauteilen, wie beispielsweise weiteren Tragprofilen z. B. aus Holz oder Metall, an Dachhaken, welche z. B. bei Ziegeldächern Anwendung finden, oder an kreuzenden Profilen, wie Montageschienen festgelegt.

Aus der DE 10 2008 028 108 A1 ist eine Verbindungsvorrichtung zum Verbinden eines Profils mit einem Bauteil, insbesondere zum Verbinden eines Profils mit einem Bauteil zum Halten von Solarmodulen bekannt. Diese Verbindungsvorrichtung weist einen Grundkörper und ein Festlegemittel, in Form einer Spannschraube zum Festlegen der Verbindungsvorrichtung am Bauteil auf. Der Grundkörper umfasst einen Anlageabschnitt, der eine mit dem Bauteil in Anlage bringbare Anlageseite sowie eine der Anlageseite gegenüberliegende Aufnahmeseite aufweist, und eine Klemmeinrichtung. Die Klemmeinrichtung umfasst ein Halteelement mit einem das Profil zumindest bereichsweise umfassenden Halteabschnitt sowie ein Spannelement, welche einen Aufnahmeraum zur zumindest bereichsweisen Aufnahme des Profils ausbilden. Das Spannelement der bekannten Verbindungsvorrichtung ist ein auf einer Schräge angeordneter Klemmkeil, welcher bei Betätigung des Spannelementes in Richtung des Halteelements und somit in Richtung des im Aufnahmeraum angeordneten Profils verschoben wird, so dass das Profil an der Verbindungsvorrichtung verspannt wird.

Die gesamte Unterkonstruktion und insbesondere das Profil sind den Witterungsverhältnissen und besonders grossen Temperaturschwankungen ausgesetzt. Nachteilig an der bekannten Lösung ist daher, dass das zumeist aus Aluminium gefertigte Profil über dessen Gebrauchsdauer Änderungen in dessen Abmessungen erfährt, welche sich nachteilig auf die Sicherheit der Verbindung auswirken, da sich diese ungewollt lockern oder gar lösen können. Ein Nachspannen der Verbindungsvorrichtung ist nur bedingt möglich, da das Spannelement von den Solarmodulen zumeist verdeckt und somit nicht direkt zugänglich ist. Sollen die bekannten Verbindungsvorrichtungen nachgespannt werden, müssen die entsprechenden Solarmodule vorgängig demontiert werden, was einen grossen Arbeitsaufwand bedingt.

Es ist daher Aufgabe der Erfindung, eine Verbindungsvorrichtung und eine Profilanordnung mit einer Verbindungsvorrichtung zu schaffen, welche die vorgenannten Nachteile nicht aufweisen und insbesondere eine einfache erstellbare und zuverlässige Verbindung zwischen dem Profil und dem Bauteil über eine längere Gebrauchsdauer gewährleisten.

Die Aufgabe ist durch die Merkmale der unabhängigen Ansprüche gelöst. Vorteilhafte Weiterbildungen sind in den Figuren und in den abhängigen Patentansprüchen dargelegt.

Gemäss der Erfindung ist das Spannelement am Grundkörper ausgebildet und umfasst einen mit dem Profil bereichsweise in Anlage bringbaren Spannabschnitt, wobei der Spannabschnitt des Spannelementes relativ zum Halteelement entgegen einer inhärenten Federkraft verschwenkbar ist.

Das Profil wird mit einem vorteilhaft entlang der Längserstreckung verlaufenden, z. B. an einer seiner Längsseite vorgesehenen Einsetzabschnitt an dem Halteelement angeordnet und über einen vorteilhaft entlang der Längserstreckung verlaufenden, z. B. an seiner anderen Längsseite vorgesehenen Halterungsabschnitt an dem Spannelement vorbeigeführt. Dabei wird dieses Spannelement seitlich ausgelenkt und aufgrund seiner inhärenten, d. h. materialbedingten Federkraft wieder in einer das Profil an der Verbindungsvorrichtung haltenden Stellung selbstständig zurückgeführt.

Das Profil ist durch eine schnappende Verbindung an der Verbindungsvorrichtung gehalten. Tritt eine Reduktion in den Abmessungen des Profils während der Gebrauchsdauer der Unterkonstruktion auf, wird aufgrund der im Spannelement wirkenden inhärenten Federkraft die Verbindung selbstständig nachgespannt und die sichere Fixierung des Profils am Bauteil sichergestellt. Für das Nachspannen sind somit keine Arbeiten z. B. eines Monteurs erforderlich.

Die Verbindungsvorrichtung kann vorgängig an dem Bauteil in der gewünschten Anordnung vormontiert und anschliessend das oder die Profile werkzeuglos an den festgelegten Verbindungsvorrichtungen angeordnet werden. Die Verbindungsvorrichtung kann werkseitig an dem Bauteil erfolgen.

Vorzugsweise weist der Grundkörper einen sich an den Anlageabschnitt anschliessenden Federabschnitt auf, der zur Schaffung eines Freistichs im montierten Zustand der Verbindungsvorrichtung am Bauteil in Bezug auf die Anlageseite des Grundkörpers beabstandet ist, wobei das Halteelement im Bereich des Federabschnitts von dem Grundkörper abragt und der Federabschnitt entgegen einer inhärenten Federkraft relativ zu dem Anlageabschnitt des Grundkörpers bewegbar ist. Nach dem Anordnen des Profils an der Verbindungsvorrichtung sichert somit nicht nur das federbeaufschlagte Spannelement das Profil, sondern dieses wird auch von dem am Federabschnitt des Grundkörpers angeordneten Halteelement unter einer Federkraft gehalten, womit eine noch sichere Verbindung zwischen dem Profil und dem Bauteil gewährleistet ist.

Bevorzugt ist das Halteelement am freien Ende des Federabsatzes angeordnet, womit die inhärente Federkraft des Federabsatzes des Grundkörpers zur sicheren Fixierung des Profils in vorteilhafter Weise ausgenutzt werden kann.

Vorzugsweise umfasst die Klemmeinrichtung ein Verspannelement mit einem Sicherungsmittel, das an dem Grundkörper vorgesehen ist und mittels dem das Spannelement in einer Position relativ zum Halteelement zumindest temporär fixierbar ist. Somit kann ein ungewolltes Ausweichen des Spannelementes und daher ein unbeabsichtigtes Lösen der Verbindung zwischen dem Profil und der Verbindungsvorrichtung verhindert werden. Das Sicherungsmittel ist vorteilhaft eine Schraube und besonders vorteilhaft eine Madenschraube, welche in einer mit einem Innengewinde versehenen im Verspannelement vorgesehene Bohrung geführt ist. Das Sicherungsmittel wirkt mit einem Ende direkt oder indirekt auf das Spannelement ein.

Bevorzugt ist das Verspannelement ausserhalb des von dem Spannelement und dem Halteelement gebildeten Aufnahmeraums und benachbart zu dem Spannelement angeordnet, womit das Sicherungsmittel leicht zugänglich und eine einfache Sicherung des Spannelementes gewährleistet ist.

Vorzugsweise weist der Spannabschnitt des Spannelementes einen Verriegelungsvorsprung auf, der im verspannten Zustand vorteilhaft in eine Vertiefung des Profils eindringt. Der Verriegelungsvorsprung ist beispielsweise nasenförmig ausgebildet, welcher einen Randabschnitt des Profils bereichsweise umgreift oder, bei einem Profil mit einer vorteilhaft über die gesamte Längserstreckung verlaufende Ausnehmung oder Vertiefung, beispielsweise eine Nut eindringt bzw. in diese eingreift. In dieser Ausführung ist das Profil und somit das an diesem befestigte Element vorteilhaft gegen ein Abheben z. B. aufgrund von auf das fixierte Element wirkende Sogkräfte, die aufgrund von Windbelastungen entstehen können, gesichert.

Bevorzugt weist das Halteelement eine Aufnahme für einen Einsetzabschnitt des Profils auf, welche optional in Bezug auf den Aufnahmeraum nach aussen gewandt ist. Die Aufnahme ist vorteilhaft zumindest bereichsweise durch den Halteabschnitt des Halteelementes begrenzt. Die Aufnahme bildet vorteilhaft einen Lagerpunt eines Drehlagers für das Profil aus, um welchen das Profil in die Verbindungsvorrichtung einschwenkbar ist. Insbesondere ein Halteelement mit einer in Bezug auf den Aufnahmeraum nach aussen gewandter Aufnahme ermöglicht eine einfache Anordnung des Profils an der Verbindungsvorrichtung.

Vorzugsweise umfasst das Festlegemittel eine Spannschraube und ein Hintergreifteil zum Hintergreifen von zueinander beabstandeten Rändern einer Montageöffnung im Bauteil, welches optional Spannaufnahmen zur Aufnahme und zur Verspannung von freien Enden der Montageöffnung aufweist. Dieses Festlegemittel ist insbesondere zum Festlegen der Verbindungsvorrichtung an einer Profilschiene mit einer in Längserstreckung verlaufenden Montageöffnung geeignet. Derartige Profilschienen werden auch als Montageschienen oder C-Schienen bezeichnet. Das Hintergreifteil ist vorteilhaft eine Gleitmutter. Alternativ weist das Hintergreifteil eine Längserstreckung auf, die grösser als der Abstand der die Montageöffnung begrenzenden, gegenüberliegenden Ränder, jedoch kleiner als der entsprechende Abstand des innerhalb der Montageöffnung vorhandenen Freiraums ist. Weiter weist dieses alternative Hintergreifteil eine Breitenerstreckung auf, die kleiner als der Abstand der die Montageöffnung begrenzenden, gegenüberliegenden Ränder ist. Ein derartiges Hintergreifteil ist an einer beliebigen Stelle entlang der Öffnung im Bauteil einführbar und innerhalb dieser verdrehbar, so dass die Verbindungsvorrichtung beispielsweise mittels einer mit einem Innengewindeabschnitt im Hintergreifteil zusammenwirkende Spannschraube an dem Bauteil verspannt werden kann.

In Abhängigkeit von der Art und des Materials des Bauteils wird das entsprechend geeignete Festlegemittel gewählt. Beispielhaft, aber nicht abschliessend, umfasst das Festlegemittel Schaftschrauben mit Gewinden, die entsprechend dem Bauteil ausgebildet sind. Beispielsweise kommen Holzgewinde, Feingewinde oder selbstschneidende Gewinde zum Einsatz. Zudem kann die Schraube auch selbstbohrend ausgebildet sein. Weiter kann das Festlegemittel auch eine Klemmeinrichtung sein, welche in oder an entsprechenden Aufnahmen am Bauteil und/oder an der Verbindungsvorrichtung festlegbar sind.

Bevorzugt ist das Festlegemittel innerhalb des Aufnahmeraums, optional im Bereich des die Anlageseite aufweisenden Anlageabschnitts des Grundkörpers, vorgesehen, womit eine sichere Festlegung der Verbindungsvorrichtung durch die Anlage des Anlageabschnitts am Bauteil gewährleistet ist. Ist an dem Grundkörper ein Federabschnitt vorgesehen, liegt der Anlageabschnitt des Grundkörpers im montierten Zustand der Verbindungsvorrichtung mit seiner Anlageseite am Bauteil an und der Federabsatz weist einen Freistich zum Bauteil auf, so dass dieser entgegen seiner inhärenten Federkraft weiterhin bewegbar ist.

Vorzugsweise weist die Klemmeinrichtung zumindest einen von der Aufnahmeseite der Grundplatte abragenden, innerhalb des Aufnahmeraums angeordneten zusätzlichen Klemmabschnitt auf, der im montierten Zustand mit einem Abschnitt des Profils in Anlage ist. Nach der Anordnung des Profils an der Verbindungsvorrichtung klemmt der zumindest eine Klemmabschnitt mit dem Abschnitt des Profils, womit das Profil zusätzlich an der Verbindungsvorrichtung gesichert wird. Das bevorzugt aus Aluminium gefertigte Profil wird vorteilhaft im Bereich der Verbindungsvorrichtung von zumindest einem der das Profil haltenden Elementen der Klemmeinrichtung bereichsweise verformt, so dass zusätzlich zu der reibschlüssig wirkenden Kräften auch formschlüssig wirkende Kräfte zur Sicherung der Verbindung zwischen dem Profil und der Verbindungsvorrichtung vorhanden sind.

Bevorzugt ist der zumindest eine Klemmabschnitt im Bereich des Anlageabschnitts des Grundkörpers vorgesehen, so dass der zumindest eine Klemmabschnitt bei der Anordnung des Profils an der Verbindungsvorrichtung nicht massgeblich in Richtung des Bauteils ausweichen kann.

Vorzugsweise ist der zumindest eine Klemmabschnitt an einem freien Endbereich, auf seiner dem Halteelement abgewandten Seite mit einer Einführschräge versehen, welche die Anordnung des Profils, z. B. durch Einschwenken desselben, an der Verbindungsvorrichtung erleichtert und die Schaffung hoher auf das Profil wirkender Klemmkräfte als zusätzliches Sicherungsmittel der Verbindung zwischen dem Profil und der Verbindungsvorrichtung ermöglicht.

Bevorzugt sind zwei zueinander beabstandete Klemmabschnitte vorgesehen und das Festlegemittel ist optional zwischen diesen Klemmabschnitten angeordnet, womit die Sicherheit der Verbindung zwischen dem Profil und der Verbindungsvorrichtung im montierten Zustand des Profils zusätzlich verbessert ist. Vorteilhaft klemmen die zwei zueinander beabstandeten Klemmabschnitte mit dem Profil an zwei zueinander beabstandeten Abschnitten des Profils. Vorteilhaft ragen beide Klemmabschnitte von dem Anlageabschnitt des Grundkörpers ab, so dass diese bei der Anordnung des Profils an der zwischen dem Profil und der Verbindungsvorrichtung nicht in Richtung des Bauteils ausweichen können. Weiter vorteilhaft weisen beide Klemmabschnitte jeweils an einem freien Endbereich, auf deren dem Halteelement abgewandten Seite mit einer Einführschräge auf, damit das Profil einfach an der Verbindungsvorrichtung anordnenbar ist.

Eine erfindungsgemässe Profilanordnung weist ein Profil, das einen in Längserstreckung des Profils verlaufenden Befestigungsflansch aufweist, und eine Verbindungsvorrichtung, welche gemäss einer der vorgenannten Ausführungsformen ausgebildet ist, zur Verbindung des Profils mit einem Bauteil auf.

Vorzugsweise ragen von dem Befestigungsflansch des Profils ein in die Aufnahme des Haltelementes der Verbindungsvorrichtung einsetzbarer Einsetzabschnitt und zumindest ein mit dem Spannelement der Verbindungsvorrichtung zumindest in Anlage bringbarer Halterungsabschnitt ab. Der Einsetzabschnitt ist vorteilhaft derart ausgebildet, dass das in das Halteelement der Verbindungsvorrichtung eingesetzte Profil um einen durch die Aufnahme des Halteelementes gebildetes Drehlager zum Festlegen des Profils an der Verbindungsvorrichtung verschwenkbar ist. Bei der Anordnung des Profils an der Verbindungsvorrichtung wird das Spannelement von dem Halterungsabschnitt seitlich ausgelenkt und aufgrund der auf dieses wirkenden inhärenten Federkraft in Anlage beziehungsweise in Hintergriff mit dem Profil zu dessen Sicherung an der Verbindungsvorrichtung gezwungen.

Bevorzugt ist im Bereich des Halterungsabschnitts des Profils eine in Längserstreckung des Profils verlaufende Ausnehmung oder Vertiefung an dem Profil vorgesehen, in welcher zumindest der Verriegelungsvorsprung des Spannelementes der Verbindungsvorrichtung eingreifen kann. Das Profil wird dadurch im montierten Zustand nicht nur über die aufgrund des Spannelementes der Verbindungsvorrichtung wirkende Klemmkraft, sondern auch aufgrund des bereichsweisen Hintergreifens des Profils gesichert, was insbesondere bei Belastungen der fixierten Elemente, wie Solarmodule, in eine Richtung senkrecht zu deren aufgespannten Elementebene, z. B. durch Windkräfte vorteilhaft ist.

Vorzugsweise ist zumindest ein von dem Befestigungsflansch des Profils abragender und zwischen dem Einsetzabschnitt und dem Halterungsabschnitt angeordneter Klemmungsabschnitt vorgesehen, der im montierten Zustand mit dem zumindest einen Klemmabschnitt der Verbindungsvorrichtung in klemmender Anlage ist. Somit wird das Profil im montierten Zustand neben der von dem Haltelement und dem Spannelement der Verbindungsvorrichtung bedingten Halterung weiter über zusätzliche Klemmkräfte an der Verbindungsvorrichtung fixiert.

Bevorzugt ist der Abstand zwischen der Innenseite der Aufnahme des Halteelementes der Verbindungsvorrichtung und des zumindest einen Klemmabschnitts der Verbindungsvorrichtung grösser als der entsprechende lichte Abstand zwischen dem Einsetzabschnitt des Profils und des zumindest einen Klemmabschnitts, womit bei der Anordnung des Profils an der Verbindungsvorrichtung ohne zusätzliche Massnahmen eine sichere Verbindung zwischen der Verbindungsvorrichtung, welche vorteilhaft zuvor am Bauteil fixiert wurde, und dem Profil sichergestellt wird. Für eine einfache Montage des Profils an der Verbindungsvorrichtung beträgt die Differenz zwischen den beiden vorgenannten Abständen vorteilhaft weniger als 5% und besonders vorteilhaft weniger als 2% des Masses des grösseren Abstands.

Vorzugsweise ist ein zum Spannelement der Verbindungsvorrichtung beabstandeter Klemmabschnitt an der Verbindungsvorrichtung vorgesehen, der mit dem Spannelement der Verbindungsvorrichtung eine Aufnahme für den Halterungsabschnitt des Profils ausbildet. Bei der Anordnung des Profils an der Verbindungsvorrichtung nimmt die durch das Spannelement und diesen Klemmabschnitt gebildete Aufnahme den Halterungsabschnitt des Profils zumindest bereichsweise auf. Vorteilhaft weist der Halterungsabschnitt des Profils im Querschnitt eine Ausgestaltung auf, welche einerseits eine vorteilhafte Wirkfläche mit dem Spannelement sowie eine weitere vorteilhafte Wirkfläche mit der entsprechenden Fläche des Klemmelementes der Verbindungsvorrichtung aufweist.

Die Bezugszeichenliste ist Bestandteil der Offenbarung.

Anhand von Figuren wird die Erfindung symbolisch und beispielhaft näher erläutert.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei
- Fig. 1 -: Eine erfindungsgemässe Verbindungsvorrichtung in Draufsicht,
- Fig. 2 -: die Verbindungsvorrichtung gem. der Fig. 1 in einer Seitenansicht,
- Fig. 3 -: eine erfindungsgemässe Profilanordnung in einer Seitenansicht auf die Verbindungsvorrichtung,
- Fig. 4 -: die Profilanordnung gem. Fig. 3 mit dem Bauteil im Schnitt, und
- Fig. 5 -: das Profil gem. den Figuren 3 und 4 in einer Schnittdarstellung.

Die in den Figuren gezeigte Verbindungsvorrichtung 11 dient dem Verbinden eines Profils 46 mit einem Bauteil 66, insbesondere zum Verbinden eines Profils mit einem Bauteil zum Halten von Solarmodulen.

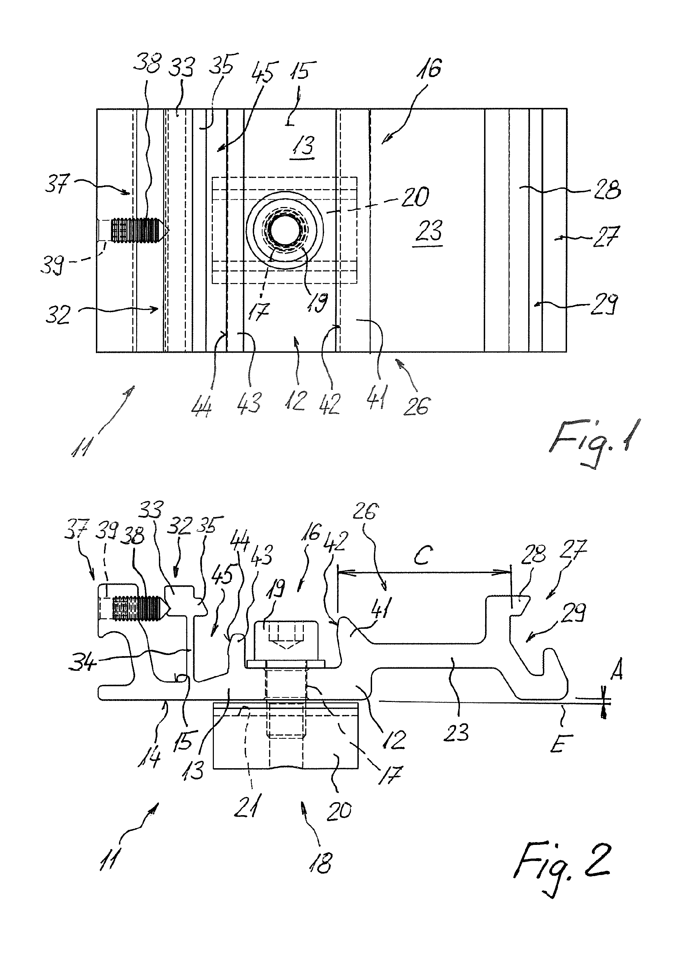

Die in den Figuren 1 und 2 als separates Bauteil dargestellte Verbindungsvorrichtung 11 weist einen mit dem Bauteil 66 in Anlage bringbaren Grundkörper 12 und ein Festlegemittel 32 zum Festlegen der Verbindungsvorrichtung 11 am Bauteil 66 auf. Der Grundkörper 12 weist einen Anlageabschnitt 13 sowie einen sich an den Anlageabschnitt 13 anschliessenden Federabschnitt 23 auf. Der Anlageabschnitt 13 des Grundkörpers 12 weist eine mit dem Bauteil 66 in Anlage bringbare Anlageseite 14 sowie eine der Anlageseite 14 gegenüberliegende Aufnahmeseite 15 auf, welche sich über den Anlageabschnitt 13 sowie den Federabschnitt 23 erstreckt. Der Federabschnitt 23 des Grundkörpers 12 ist zur Schaffung eines Freistichs im montierten Zustand der Verbindungsvorrichtung 11 am Bauteil 66 in Bezug auf eine von der Anlageseite 14 des Grundkörpers 12 aufgespannten Ebene E um einen Abstand A beabstandet. Der Federabschnitt 23 ist entgegen einer inhärenten, d. h. einer materialbedingten Federkraft relativ zu dem Anlageabschnitt 13 des Grundkörpers 12 bewegbar.

Weiter umfasst der Grundkörper 12 eine Klemmeinrichtung 26 zur Fixierung des Profils 46 an der Verbindungsvorrichtung 11. Die Klemmeinrichtung 26 ist an der Aufnahmeseite 15 des Grundkörpers 12 vorgesehen und ragt von dieser ab. Die Klemmeinrichtung 26 umfasst ein Halteelement 27 sowie ein Spannelement 32, welche einen Aufnahmeraum 16 zur bereichsweisen Aufnahme des Profils 46 ausbilden.

Das Halteelement 27 ist an einem freien Ende des Federabschnitts 23 des Grundkörpers 12 angeordnet und ragt somit in dem Bereich des Federabschnitts 23 von dem Grundkörper 12 ab. Das Halteelement 27 weist einen das Profil 46 bereichsweise umfassenden Halteabschnitt 28 auf, der eine am Halteelement 27 vorgesehene Aufnahme 29 für einen Einsetzabschnitt 53 des Profils 46 in Bezug auf die Darstellung gemäss Figur 1 nach oben begrenzt. Diese Aufnahme 29 ist in Bezug auf den Aufnahmeraum 16 nach aussen gewandt.

Das Spannelement 32 der Klemmeinrichtung 26 umfasst einen mit dem Profil 46 bereichsweise in Anlage bringbaren Spannabschnitt 33. Das Spannelement 32 weist zwischen dem Spannabschnitt 33 und der Aufnahmeseite 15 des Grundkörpers 12 einen gegenüber dem Spannabschnitt 33 im Querschnitt in der Dicke reduzierten Mittelabschnitt 34 auf und ist daher entgegen einer inhärenten, d. h. materialbedingten Federkraft verschwenkbar. Weiter weist der Spannabschnitt 33 an seiner dem Halteabschnitt 26 zugewandten Seite einen Verriegelungsvorsprung 35 auf, der im verspannten Zustand in eine in Längserstreckung des Profils 46 verlaufende Ausnehmung 57 oder Vertiefung des Profils 46 eindringt.

Weiter umfasst die Klemmeinrichtung 26 ein ebenfalls von der Aufnahmeseite 15 des Grundkörpers 12 abragendes Verspannelement 37, welches ausserhalb des von dem Spannelement 32 und dem Halteelement 27 gebildeten Aufnahmeraums 16 und benachbart zu dem Spannelement 32 angeordnet ist. Das Verspannelement 37 umfasst als ein Sicherungsmittel 38 eine Madenschraube, die in einer Gewindebohrung 39 im Verspannelement 37 geführt ist und mit einem freien Ende auf eine Seite des Spannelementes 32 wirkt, die der Seite mit dem Verriegelungsvorsprung 35 abgewandt ist. Damit ist das Spannelement 32 in einer Position relativ zum Halteelement 27 fixierbar.

Zusätzlich weist die Klemmeinrichtung 26 einen ersten Klemmabschnitt 41 und einen zu diesem beabstandeten zweiten Klemmabschnitt 43 auf, die jeweils von der Aufnahmeseite 15 der Grundplatte 12 abragen und die innerhalb des Aufnahmeraums 16 angeordnet sind. Im montierten Zustand kommen die Klemmabschnitte 41 und 43 mit einem entsprechenden Abschnitt 56, 58 des Profils 46 in Anlage und sichern dieses zusätzlich an der Verbindungseinrichtung 11. Der erste Klemmabschnitt 41 ist an seinem freien Endbereich, auf seiner dem Halteelement 27 abgewandten Seite mit einer Einführschräge 42 versehen. Der zweite Klemmabschnitt 43 ist an seinem freien Endbereich, auf seiner dem Halteelement 27 abgewandten Seite ebenfalls mit einer Einführschräge 44 versehen. Die Einführschräge 42 am ersten Klemmabschnitt 41 sowie die Einführschräge 44 am zweiten Klemmabschnitt 43 ermöglichen eine einfache Anordnung des Profils 46 an der Verbindungseinrichtung 11.

Da die Klemmabschnitte 41 und 43 im Bereich des Anlageabschnitts 13 des Grundkörpers 12 vorgesehen sind, weichen diese bei der Anordnung des Profils 46 an der Verbindungseinrichtung 11 nicht in eine Richtung zum Bauteil 66 hin aus.

Zwischen dem Spannelement 32 und dem zweiten Klemmabschnitt 43 ist eine Aufnahme für einen Halterungsabschnitt 56 des Profils 46 ausgebildet. Der Grundkörper 12 sowie die von diesem abragenden Elemente 27, 32 und 37 beziehungsweise die von diesem abragenden Klemmabschnitte 41 und 43 sind einteilig und vorteilhaft als Stranggussprofil, z. B. aus Aluminium ausgebildet.

Die Verbindungseinrichtung 11 umfasst weiter ein Festlegemittel 18 in Form einer Spannschraube 19 mit einer in einer Längsnut des Bauteils 66 anordnenbaren Gleitmutter als Hintergreifteil 20. Das Festlegemittel 18 ist zwischen den beiden Klemmabschnitten 41 und 43 und somit innerhalb des Aufnahmebereichs 16 beziehungsweise im Bereich des Anlageabschnitts 13 des Grundkörpers 12 angeordnet. Die Spannschraube 19 ist durch eine Öffnung 17 im Grundkörper 12 hindurchgeführt und einerseits durch den Schraubenkopf an einem Schaftende und dem Hintergreifteil 20 am anderen Schaftende verliersicher am Grundkörper 12 bis zur Verwendung der Verbindungseinrichtung 11 gehalten. Das Hintergreifteil 20 ist mit zwei parallel zueinander verlaufenden Spannnuten 21 versehen, deren Funktion nachfolgend noch beschrieben wird.

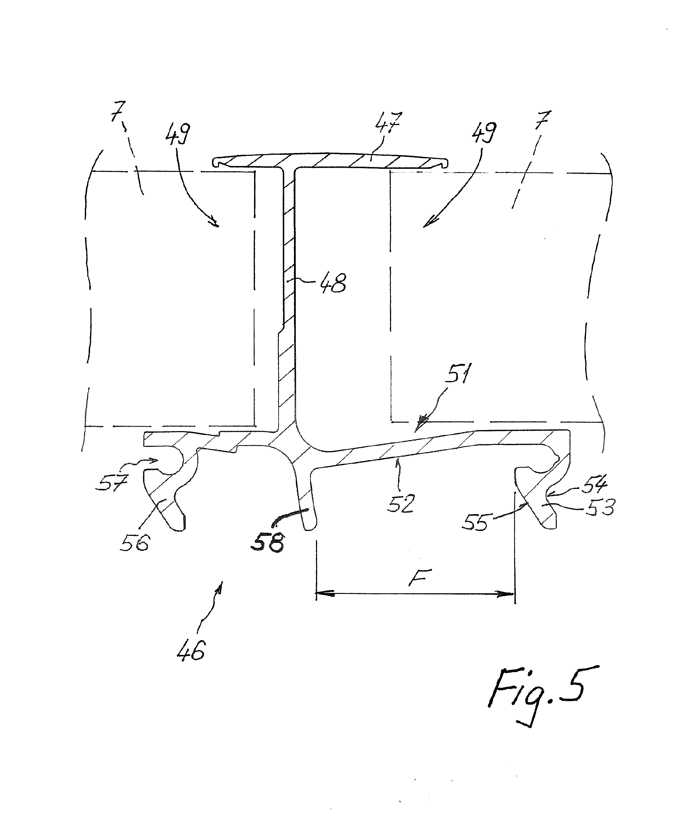

In der Figur 5 ist ein Profil 46 gezeigt, welches zur Verwendung mit einer Verbindungsvorrichtung 11 besonders geeignet ist. Das Profil 46 dient der Fixierung von plattenförmigen Elementen, wie zur Fixierung von hier ansatzweise dargestellten Solarmodulen 7.

Das Profil 46 weist einen Befestigungsflansch 51, einen Halteflansch 47 sowie einen den Befestigungsflansch 51 und den Halteflansch 47 verbindenden beziehungsweise diese beabstandenden Profilsteg 48 auf. Der Halteflansch 47 sowie der Befestigungsflansch 51 überragen im Querschnitt den Profilsteg 48 beidseitig, so dass beidseitig des Profilstegs 48 jeweils eine Aufnahme 49 für die Solarmodule 7 ausgebildet ist.

Von der Seite 52 des Befestigungsflansches 51, die im montierten Zustand der Profilanordnung 50 der Verbindungsvorrichtung 11 zugewandt ist, ragt an einem freien Ende ein über die gesamte Längserstreckung des Profils 46 verlaufender, in die Aufnahme 29 des Haltelementes 27 der Verbindungsvorrichtung 11 einsetzbarer Einsetzabschnitt 53 davon ab. Der Einsetzabschnitt 53 verläuft gebogen, wobei dessen konkave Seite 54 nach aussen gerichtet ist.

Von der Seite 52 des Befestigungsflansches 51 ragt zudem an dessen anderen freien Ende ein über die gesamte Längserstreckung des Profils 46 verlaufender, mit dem Spannelement 32 der Verbindungsvorrichtung 11 bereichsweise in Anlage bringbarer Halterungsabschnitt 56 davon ab. Bei der Anordnung des Profils 46 an der Verbindungsvorrichtung 11 dringt der Halterungsabschnitt 56 in die Aufnahme 45 der Verbindungsvorrichtung 11 ein, welche von dem Spannelement 32 der Verbindungsvorrichtung 11 und dem zu diesem beabstandeten, zweiten Klemmabschnitt 43 der Verbindungsvorrichtung 11 gebildet ist.

Im Bereich des Halterungsabschnitts 56 ist eine in Längserstreckung des Profils verlaufende Längsnut als Ausnehmung 57 oder Vertiefung an dem Profil 46 vorgesehen, in welcher der Verriegelungsvorsprung 35 des Spannelementes 32 der Verbindungsvorrichtung 11 im montierten Zustand der Profilanordnung 50 eingreift.

Weiter ragt von der Seite 52 des Befestigungsflansches 51 im Bereich des Schnittpunktes des Profilstegs 48 mit dem Befestigungsflansch 51 ein Klemmungsabschnitt 58 ab, welcher somit zwischen dem Einsetzabschnitt 53 und dem Halterungsabschnitt 56 vorgesehen ist. Im montierten Zustand der Profilanordnung 50 ist der Klemmungsabschnitt 58 mit dem ersten Klemmabschnitt 41 der Verbindungsvorrichtung 11 in klemmender Anlage.

Der Abstand C zwischen der Innenseite der Aufnahme 29 des Halteelementes 27 der Verbindungsvorrichtung 11 und des ersten Klemmabschnitts 41 der Verbindungsvorrichtung 11 ist etwas grösser als der entsprechende lichte Abstand F zwischen der konvexen Seite 55 des Einsetzabschnitts 53 des Profils 46 und des Klemmungsabschnitts 58 des Profils 46.

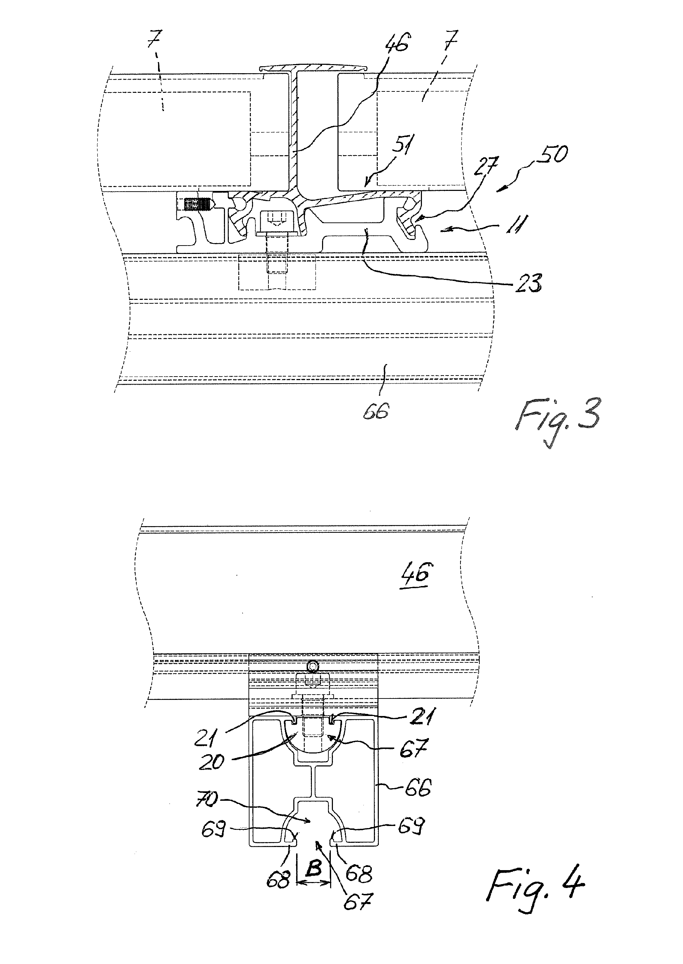

Wie insbesondere aus der Darstellung gemäss der Figur 3 erkennbar ist, wird der Befestigungsflansch 51 bei der Anordnung des Profils 46 an der Verbindungsvorrichtung 11 im Bereich der Anlage am Halteelement 27 verbogen, so dass eine inhärente Federkraft auf diesen Abschnitt des Befestigungsflansches 51 und somit auf den Federabschnitt 23 des Grundkörpers 12 der Verbindungsvorrichtung 11 wirkt. Durch das Zusammenspiel der Kräfte wird eine sicher Verbindung des Profils 46 mit der Verbindungsvorrichtung 11 gewährleistet, welche auch bei einer Reduktion der Abmessungen des Profils 46 über eine gewisse Gebrauchsdauer nachgespannt wird. Ein manuelles Nachspannen der Profilanordnung 50 ist daher nicht mehr erforderlich.

Das Bauteil 66 ist in diesem Ausführungsbeispiel ein Montageschiene mit zwei einander gegenüberliegenden, sich über die gesamte Längserstreckung verlaufenden Montageöffnungen 67. Jede Montageöffnung 67 ist jeweils von zwei einander gegenüberliegenden Rändern 68 seitlich begrenzt, deren freie Enden 69 in den Aufnahmeraum 70 der Montageöffnung 67 gerichtet sind. Die innenseitige Breite des Aufnahmeraums 70 ist grösser als der entsprechende Abstand B der die Montageöffnung 67 begrenzenden Ränder 68.

Wie bereits dargelegt wurde, ist das Hintergreifteil 20 des Festlegemittels 19 als Gleitmutter ausgebildet und weist zwei parallel zueinander verlaufende Spannnuten 21 auf, in welchen im verspannten Zustand der Profilanordnung 50 die freien Enden 69 der die Montageöffnung 67 begrenzenden Ränder 68 zu liegen kommen. Während dem Verspannen des Festlegemittels 19 werden diese Ränder 68 verformt, womit eine sichere Fixierung der Verbindungsvorrichtung 11 und somit des Profils 46 am Bauteil 66 gewährleistet wird.

### Bezugszeichenliste

- 7: Solarmodul

- 11: Verbindungsvorrichtung
- 12: Grundkörper
- 13: Anlageabschnitt v. 12
- 14: Anlageseite v. 12
- 15: Aufnahmeseite v. 12
- 16: Aufnahmeraum
- 17: Durchführöffnung f. 19
- 18: Festlegemittel
- 19: Spannschraube
- 20: Hintergreifteil
- 21: Spannnut

- 23: Federabschnitt v. 12

- 26: Klemmeinrichtung
- 27: Halteelement
- 28: Halteabschnitt
- 29: Aufnahme in 27

- 32: Spannelement
- 33: Spannabschnitt
- 34: Mittelabschnitt
- 35: Verriegelungsvorsprung

- 37: Verriegelungselement
- 38: Sicherungsmittel
- 39: Gewindebohrung

- 41: 1. Klemmabschnitt
- 42: Einführschräge v. 41
- 43: 2. Klemmabschnitt
- 44: Einführschräge v. 43
- 45: Aufnahme f.
- 46: Profil
- 47: Halteflansch
- 48: Profilsteg
- 49: Aufnahme f. 7
- 50: Profilanordnung
- 51: Befestigungsflansch
- 52: Seite v. 51 (11 zugewandt)
- 53: Einsetzabschnitt
- 54: konkave Seite v. 53
- 55: konvexe Seite v. 53
- 56: Halterungsabschnitt
- 57: Ausnehmung v. 46 (Längsnut)
- 58: Klemmungsabschnitt

- 66: Bauteil
- 67: Montageöffnung
- 68: Rand v. 67
- 69: freies Ende v. 68
- 70: Aufnahmeraum

- A: Abstand E/23
- B: Breite v. 67
- C: Abstand 27/42
- E: Ebene v. 14
- F: Abstand 55/58

## Patentansprüche

1. Verbindungsvorrichtung zum Verbinden eines Profils (46) mit einem Bauteil (66), insbesondere zum Verbinden eines Profils mit einem Bauteil zum Halten von Solarmodulen (7), wobei
die Verbindungsvorrichtung (11) einen Grundkörper (12) und ein Festlegemittel (18) zum Festlegen der Verbindungsvorrichtung (11) am Bauteil (66) aufweist, wobei
der Grundkörper (12) einen Anlageabschnitt (13), der eine mit dem Bauteil (66) in Anlage bringbare Anlageseite (14) sowie eine der Anlageseite (14) gegenüberliegende Aufnahmeseite (15) aufweist, und eine Klemmeinrichtung (26) umfasst, die an der Aufnahmeseite (15) des Grundkörpers (12) vorgesehen ist und von dieser abragt, wobei die Klemmeinrichtung (26) ein Halteelement (27) mit einem das Profil (46) zumindest bereichsweise umfassenden Halteabschnitt (28) sowie ein Spannelement (32) umfasst, welche einen Aufnahmeraum (16) zur zumindest bereichsweisen Aufnahme des Profils (46) ausbilden, **dadurch gekennzeichnet, dass**
das Spannelement (32) am Grundkörper (12) ausgebildet ist und einen mit dem Profil (46) bereichsweise in Anlage bringbaren Spannabschnitt (33) umfasst, wobei der Spannabschnitt (33) des Spannelementes (32) relativ zum Halteelement (27) entgegen einer inhärenten Federkraft verschwenkbar ist.

2. Verbindungsvorrichtung nach Anspruch 1, **dadurch gekennzeichnet, dass** der Grundkörper (12) einen sich an den Anlageabschnitt (13) anschliessenden Federabschnitt (23) aufweist, der zur Schaffung eines Freistichs im montierten Zustand der Verbindungsvorrichtung (11) am Bauteil (66) in Bezug auf die Anlageseite (14) des Grundkörpers (12) beabstandet ist, wobei das Halteelement (27) im Bereich des Federabschnitts (23) von dem Grundkörper (12) abragt und der Federabschnitt (23) entgegen einer inhärenten Federkraft relativ zu dem Anlageabschnitt (13) des Grundkörpers (12) bewegbar ist,wobei das Halteelement (27) vorteilhaft am freien Ende des Federabschnitts (23) angeordnet ist.

3. Verbindungsvorrichtung nach Anspruch 1 oder 2, **dadurch gekennzeichnet, dass** die Klemmeinrichtung (26) ein Verspannelement (37) mit einem Sicherungsmittel (38) umfasst, das an dem Grundkörper (12) vorgesehen ist und mittels dem der Spannabschnitt (33) des Spannelementes (32) in einer Position relativ zum Halteelement (27) zumindest temporär fixierbar ist, wobei
das Verspannelement (37) vorteilhaft ausserhalb des von dem Spannelement (32) und dem Halteelement (27) gebildeten Aufnahmeraums (16) und benachbart zu dem Spannelement (32) angeordnet ist.

4. Verbindungsvorrichtung nach einem der vorhergehenden Ansprüche, **dadurch gekennzeichnet, dass** der Spannabschnitt (33) des Spannelementes (32) einen Verriegelungsvorsprung (35) aufweist, der im verspannten Zustand vorteilhaft in eine Ausnehmung (57) oder Vertiefung des Profils (46) eindringt.

5. Verbindungsvorrichtung nach einem der vorhergehenden Ansprüche, **dadurch gekennzeichnet, dass** das Halteelement (27) eine Aufnahme (29) für einen Einsetzabschnitt (53) des Profils (46) aufweist, wobei die Aufnahme (29) optional in Bezug auf den Aufnahmeraum (16) nach aussen gewandt ist.

6. Verbindungsvorrichtung nach einem der vorhergehenden Ansprüche, **dadurch gekennzeichnet, dass** das Festlegemittel (18) eine Spannschraube (19) und ein Hintergreifteil (20), vorteilhaft eine Gleitmutter, zum Hintergreifen von zueinander beabstandeten Rändern (68) einer Montageöffnung (67) im Bauteil (66) umfasst, wobei das Hintergreifteil (20) optional Spannnuten (21) zur Aufnahme und zur Verspannung von freien Enden (69) der Ränder (68) der Montageöffnung (67) aufweist.

7. Verbindungsvorrichtung nach einem der vorhergehenden Ansprüche, **dadurch gekennzeichnet, dass** das Festlegemittel (18) innerhalb des Aufnahmeraums (16), optional im Bereich des Anlageabschnitts (13) des Grundkörpers (12), vorgesehen ist.

8. Verbindungsvorrichtung nach einem der vorhergehenden Ansprüche, **dadurch gekennzeichnet, dass** die Klemmeinrichtung (26) zumindest einen von der Aufnahmeseite (15) des Grundkörpers (12) abragenden, innerhalb des Aufnahmeraums (16) angeordneten zusätzlichen Klemmabschnitt (41, 43) aufweist, der im montierten Zustand mit einem Abschnitt (53, 56, 58) des Profils (46) in Anlage ist, wobei der zumindest eine Klemmabschnitt (41, 43) vorteilhaft im Bereich des Anlageabschnitts (13) des Grundkörpers (12) vorgesehen ist oder
der zumindest eine Klemmabschnitt (41, 43) vorteilhaft an einem freien Endbereich, auf seiner dem Halteelement (27) abgewandten Seite mit einer Einführschräge (42, 44) versehen ist.

9. Verbindungsvorrichtung nach einem der vorhergehenden Ansprüche, **dadurch gekennzeichnet, dass** das zwei zueinander beabstandete Klemmabschnitte (41, 43) vorgesehen sind und optional das Festlegemittel (18) zwischen diesen Klemmabschnitten (41, 43) angeordnet ist.

10. Profilanordnung mit einem Profil (46), das einen in Längserstreckung des Profils (46) verlaufenden Befestigungsflansch (51) aufweist, und mit einer Verbindungsvorrichtung (11) nach einem der vorhergehenden Ansprüche zur Verbindung des Profils (46) mit einem Bauteil (66).

11. Profilanordnung nach Anspruch 10, **dadurch gekennzeichnet, dass** von dem Befestigungsflansch (51) des Profils (46) ein in die Aufnahme (29) des Haltelementes (27) der Verbindungsvorrichtung (11) einsetzbarer Einsetzabschnitt (53) und zumindest ein mit dem Spannelement (32) der Verbindungsvorrichtung (11) zumindest in Anlage bringbarer Halterungsabschnitt (56) abragen.

12. Profilanordnung nach Anspruch 10 oder 11, **dadurch gekennzeichnet, dass** im Bereich des Halterungsabschnitts (56) des Profils (46) eine in Längserstreckung des Profils (46) verlaufende Ausnehmung (57) oder Vertiefung an dem Profil (46) vorgesehen ist, in welcher zumindest der Verriegelungsvorsprung (35) des Spannelementes (32) der Verbindungsvorrichtung (11) eingreifen kann.

13. Profilanordnung nach einem der vorhergehenden Ansprüche, **dadurch gekennzeichnet, dass** zumindest ein von dem Befestigungsflansch (51) des Profils (46) abragender und zwischen dem Einsetzabschnitt (53) und dem Halterungsabschnitt (56) angeordneter Klemmungsabschnitt (58) vorgesehen ist, der im montierten Zustand mit dem zumindest einen Klemmabschnitt (41) der Verbindungsvorrichtung (11) in klemmender Anlage ist.

14. Profilanordnung nach Anspruch 13, **dadurch gekennzeichnet, dass** der Abstand (C) zwischen der Innenseite der Aufnahme (29) des Halteelementes (27) der Verbindungsvorrichtung (11) und des zumindest einen Klemmabschnitts (41) der Verbindungsvorrichtung (11) grösser als der entsprechende lichte Abstand (F) zwischen dem Einsetzabschnitt (53) des Profils (46) und des zumindest einen Klemmungsabschnitt (58) des Profils (46) ist.

15. Profilanordnung nach einem der vorhergehenden Ansprüche, **dadurch gekennzeichnet, dass** ein zum Spannelement (32) der Verbindungsvorrichtung (11) beabstandeter Klemmabschnitt (43) an der Verbindungsvorrichtung (11) vorgesehen ist, der mit dem Spannelement (32) der Verbindungsvorrichtung (11) eine Aufnahme (45) für den Halterungsabschnitt (56) des Profils (46) ausbildet.
